# EUROPÄISCHE PATENTSCHRIFT

(11) **EP 0 626 479 B1**
(45) Veröffentlichungstag und Bekanntmachung des Hinweises auf die Patenterteilung: **31.07.1996**
(21) Anmeldenummer: 94107107.8
(22) Anmeldetag: 06.05.1994
(51) Int. Cl.: D21H 23/58, B05C 1/08

(54) **Streicheinrichtung zur Beschichtung laufender Stoffbahnen**
Coating apparatus for coating moving webs
Dispositif d'enduction pour l'enduction de bandes en mouvement

(30) Priorität: 27.05.1993 DE 4317657
(43) Veröffentlichungstag der Anmeldung: 30.11.1994
(73) Patentinhaber: J.M. Voith GmbH, D-89522 Heidenheim (DE)
(72) Erfinder: Pichler, Jörg, D-89555 Steinheim (DE); Kustermann, Dr. Martin, D-89522 Heidenheim (DE); Trefz, Dr. Michael, D-89522 Heidenheim (DE)
(74) Vertreter: Weitzel, Wolfgang, Dr.-Ing. Patentanwalt

(56) Entgegenhaltungen:
- EP-A- 0 427 924
- EP-B- 0 362 174
- DATABASE WPI Section Ch, Week 8636, Derwent Publications Ltd., London, GB; Class G06, AN 86-236977 & JP-A-57 002 039 (DAINIPPON PRINTING KK) 7. Januar 1982

## Beschreibung

Die Erfindung betrifft eine Streicheinrichtung zur Beschichtung laufender Warenbahnen, vorzugsweise aus Papier oder Karton. Dabei ist mit Streicheinrichtung eine Art von Einrichtungen gemeint, die Walzen aufweisen, wovon mindestens eine eine Bahnführungswalze und eine andere eine Dosierwalze ist, und die eine Beschichtung oder Imprägnierung laufenden Warenbahn mit einer Streichmasse oder sonstigen Beschichtungsmasse oder Imprägniermasse bewirkt.

Eine Einrichtung entsprechend dem Gattungsbegriff ist bekannt aus der EP 0362174 A. Bei dieser bekannten Streicheinrichtung hat die Dosierwalze einen zylindrischen Kern, sowie einen in Form eines Gewindes darauf aufgewickelten Draht kleinen Durchmessers, der z.B. mit 0,3 mm angegeben ist. Der Kern kann nach Angaben dieser Schrift etwa 300 mm Durchmesser aufweisen. Kleine Walzen geringen Durchmessers dieses Aufbaus hat man bisher oft benutzt und als gerillte Rollrakel bezeichnet. Der Durchmesser dieser sogenannten Rollrakeln betrug im allgemeinen zwischen 10 und 20 mm. Der Nachteil aller dieser Einrichtungen ist der Verschleiß der feinen Drahtumwicklung des Trägerkerns sowohl bei der gerillten Rollrakel als auch bei der mit Drahtumwicklung versehenen Dosierwalze. Dieser Verschleiß tritt insbesondere im Fall von Pigment-Beschichtungen auf. Dadurch ist die erforderliche Konstanz des Auftragsmengenstromes nicht mehr über die Standzeit der gerillten Dosierwalze oder Rollrakel gegeben. Durch das Abtragen der Kuppen der die Rillen bildenden Drähte oder Erhöhungen tritt nämlich eine Verminderung des Durchtrittsquerschnitts zwischen Dosierwalze und Bahnführungswalze auf, so daß das Auftragsgewicht immer mehr sinkt.

Ein weiterer großer Nachteil ist aber, daß beim Übergang eines abgenutzten Dosiersystems auf ein fertigungsfrisches Dosiersystem beim Wechsel derselben ein erheblicher Sprung im Auftragsgewicht auftritt. Dies führt zu Schwankungen der Qualität des Fertigproduktes, die teilweise nicht mehr toleriert werden können. Die Aufgabe der Erfindung ist es daher, den Verschleiß der Dosierwalze oder Rakel zu reduzieren.

Diese Aufgabe wird erfindungsgemäß durch die Merkmale des kennzeichnenden Teils des Patentanspruchs 1 gelöst. Durch die erfindungsgemäße Maßnahme wird während des Betriebes ein Nacharbeiten der Rillen der Dosierwalze vorgenommen, so daß der Verschleiß wieder ausgeglichen wird. Dies erfolgt abhängig von der Messung des augenblicklich erreichten Auftragsgewichts, vorzugsweise bezogen auf nasse Substanz.

Dazu ist es notwendig, daß nicht mehr drahtumwickelte Dosierwalzen, sondern einstückige Dosierwalzen benutzt werden, deren Rillen in die Oberfläche derselben eingearbeitet sind. Die Nachformung der Rillen kann günstig mit einer Laserstrahl-Schneideinrichtung oder mit einer Rillen- bzw. Gewindedrückeinrichtung erreicht werden. Um das Arbeiten einer solchen Einrichtung genau durchführen zu können, ist es vorteilhaft, wenn Reinigungseinrichtungen an der Oberfläche der Dosierwalze eingesetzt werden, so daß die Rillenformeinrichtung an einer sauberen Oberfläche der Dosierwalze arbeitet.

Nachfolgend wird die Erfindung anhand der Ausführungsbeispiele der Zeichnung erläutert, wobei im einzelnen darstellen:
Figur 1 prinzipmäßig eine Seitenansicht der erfindungsgemäßen Einrichtung;
Figur 2 ein Detail der Rillenformeinrichtung in Draufsicht und
Figur 3 eine weitere Variante der Erfindung prinzipmäßig in Seitenansicht.

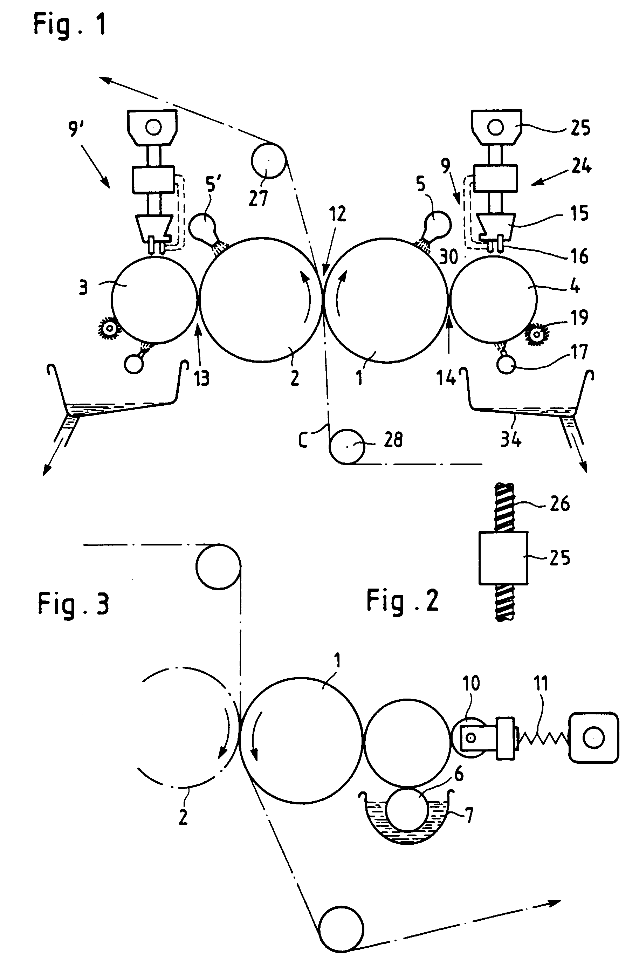

In Figur 1 hat man zwei Bahnführungswalzen 1 und 2, denen jeweils eine mit gerillter Mantelfläche ausgestattete Dosierwalze 3 bzw. 4 zugeordnet ist. Die Bahn C ist über Umlenkrollen 27 und 28 in den zwischen den beiden Bahnführungswalzen 1 und 2 gebildeten Preßspalt 12 geführt. Die Bahnführungswalzen bilden mit den Dosierwalzen jeweils einen Dosierspalt 13 bzw. 14. Der Auftrag der Beschichtungsmasse erfolgt hier mittels einer einen walzenlangen Dosierspalt aufweisenden Sprüheinrichtung oder Gießeinrichtung 5 bzw. 5' auf den Mantel der Bahnführungswalzen 1 bzw. 2. Die Rillenformeinrichtungen, die den beiden Dosierwalzen 3 und 4 zugeordnet sind, sind hier nur angedeutet. Um die Rillen der Dosierwalzen zu reinigen, ist jeweils eine Reinigungseinrichtung 17 diesen zugeordnet, die z.B. mittels Sprühstrahlen arbeiten kann, wobei jeweils eine Auffangwanne 34 zur Aufnahme der abgewaschenen Beschichtungsmenge vorgesehen ist. Die Reinigung kann verstärkt werden durch eine zusätzliche Reinigungsbürste 19.

Die Rillenformeinrichtung 9, 9' ist in diesem Fall mit einer Laserstrahlkanone 16 ausgebildet, die über einen Halter 15 und eine Spindelhubeinrichtung 24 getragen ist, welche wiederum von einem Transportkopf 25 gehalten ist. Dieser Transportkopf ist an einer Leitspindel 26 entlang der Dosierwalze geführt. Der zugehörige Motor und die Steuerungseinrichtungen dafür sind hier nicht dargestellt. Mittels dieser Leitspindel kann die Rillenformeinrichtung längs der Walzen hin- und hergeführt werden, um während dieser Bewegung die Rillen nachzuarbeiten, je nachdem wie stark bereits der Verschleiß, d.h. die Abnahme des Rillenquerschnitts aufgetreten ist. Um eine genaue Materialabnahme für eine genau gesteuerte Zunahme der Rillentiefe zu erreichen, ist die Hubspindeleinheit abhängig von einer Distanzmeßeinrichtung 30 steuerbar, die den Abstand der Laserstrahlkanone oder des Bearbeitungswerkzeuges allgemein von der Dosierwalze bzw. von deren Mantelfläche mißt. Man kann so vorgehen, daß man entsprechend einem bestimmten aufgetretenen Verschleiß eine Nacharbeitung zwischen 2 und 20 µm vornimmt. Das Profilierwerkzeug - z.B. die Laserstrahlkanoneneinrichtung - kann man so ausbilden, daß 1-10 nebeneinanderliegende Gänge oder mehr der Profilierung gleichzeitig bearbeitet werden.

In Figur 3 ist eine ähnliche Einrichtung dargestellt, wobei hier die Drehrichtungen der Walzen und die Bahnlaufrichtung umgekehrt sind wie in Figur 1. Hier ist als Auftragswerk jeweils eine Tauchwalze 6 vorgesehen, die in in einer Wanne 7 befindliche Beschichtungsmasse eintaucht. In diesem Fall ist angedeutet, daß die Rillennachformeinrichtung 9' mit einem Rad 10 arbeitet, so daß also die Rillenformeinrichtung praktisch eine Gewindedrückeinrichtung darstellt. Es sind hierbei Mittel notwendig, um eine definierte Anpreßkraft zu erreichen, die hier durch die Feder 11 angedeutet sind. Dabei ist es günstig, wenn die Gewindedrückeinrichtungen genau diametral einander gegenüber angeordnet sind und synchron längs der Walzen bewegt werden.

Es sind nun natürlich die verschiedensten Varianten der Beschichtungseinrichtung an sich möglich, die aber aus dem Stand der Technik weitgehend bekannt sind. Es ist natürlich möglich, daß nur eine einzige Bahnführungswalze vorgesehen ist, und daß die Beschichtung der Bahn durch den sogenannten Schleifauftrag bewirkt wird, während ja bei den bisher dargestellten Einrichtungen ein beidseitiger Auftrag möglich ist. Es kann natürlich nur eine Seite gestrichen werden, während die andere Seite mit einer nicht abrasiven Flüssigkeit beschichtet oder imprägniert wird, so daß an dieser Dosierwalze die Rillennachformeinrichtung nicht notwendig ist. Andererseits sind natürlich auch noch andere als die beschriebenen Rillenformeinrichtungen möglich.

Schließlich ist in bestimmten Fällen es auch möglich, eine gewisse Profilierung der Dosierwalzen über deren Länge vorzunehmen, wenn eine unterschiedlich starke Zustellung der Rillenformeinrichtung über die Länge der Walzen eingestellt wird. Dies könnte so geschehen, daß man z.B. ein hydraulisches Hubelement, das aus Kolben und Zylinder besteht und an der Stelle 11 der angedeuteten, federnden Einrichtung in Figur 2 angeordnet ist, mit entsprechend variablem gesteuerten Druck beaufschlagt. Im anderen Fall - Figur 1 - würde der Hub der Spindelhubeinrichtung 25 entsprechend gesteuert.

## Patentansprüche

1. Streicheinrichtung mit mindestens je einer Walze und dieser zugeordneten Bahnführungswalze (1, 2) und mindestens einer von diesen zugeordneten Dosierwalze (3, 4) mit im wesentlichen in Umfangsrichtung oder in Form eines Gewindes gerillter Oberfläche, um die Beschichtungsmasse in dem zwischen der Walze und der Bahnführungswalze (1, 2) einerseits und den Dosierwalzen (3, 4) andererseits bestehenden Spalt (13, 14) zu dosieren, gekennzeichnet durch eine während des Betriebs der Streicheinrichtung an die Dosierwalzen (1, 2) anstellbare Rillenformeinrichtung oder Rillennachformeinrichtung (9, 9').

2. Einrichtung nach Anspruch 1, dadurch gekennzeichnet, daß die Rillenformeinrichtung eine Laserstrahl-Schneideinrichtung (9) ist.

3. Einrichtung nach Anspruch 1, dadurch gekennzeichnet, daß die Rillenformeinrichtung eine mechanische Rillen- oder Gewindedrückeinrichtung (9') ist.

4. Einrichtung nach einem der Ansprüche 1-3, gekennzeichnet durch eine Reinigungseinrichtung (17, 19) zur Reinigung der Oberfläche der Dosierwalze (3, 4), bevor diese die Rillenformeinrichtung nach dem Dosieren der Streichmasse in dem Dosierspalt wieder erreicht.

5. Einrichtung nach einem der Ansprüche 1-4, dadurch gekennzeichnet, daß zwei Bahnführungswalzen (1, 2) zwischen sich einen von der zu beschichtenden Warenbahn durchlaufenen Preßspalt (12) zwecks Übertragung der Beschichtungsmasse auf die Warenbahn bilden und daß die den beiden Dosierwalzen (3, 4) zugeordneten Rillenformeinrichtungen (9, 9', 10, 11) einander diametral genau gegenüber angeordnet und synchron in ihrer Längsbewegung entlang den Walzen gesteuert sind.

6. Einrichtung nach einem der Ansprüche 1-5, dadurch gekennzeichnet, daß entlang den Dosierwalzen (3, 4) eine lagegeregelte Zustellung der Rillenformeinrichtung (9, 9') in Bezug auf die Rotationsachsen bzw. Mantelflächen der jeweils zugeordneten Dosierwalze (3, 4) vorgesehen ist.

## Claims

1. Coating apparatus respectively with at least one roller and sheet material guide roller (1, 2) allocated thereto and metering roller (3, 4) allocated to at least one of these with a surface grooved essentially in peripheral direction or in the form of a thread in order to meter the coating mass in the gap (13, 14) existing between the roller and the sheet material guide roller (1, 2) on the one hand and the metering rollers (3, 4) on the other hand, characterised by a groove forming means or groove copy forming means (9, 9') which may be attached to the metering rollers (1, 2) during operation of the coating apparatus.

2. Apparatus according to Claim 1, characterised in that the groove forming means is a laser beam cutting device (9).

3. Apparatus according to Claim 1, characterised in that the groove forming means is a mechanical groove or thread bulging device (9').

4. Apparatus according to one of Claims 1-3, characterised by a cleaning device (17, 19) for cleaning the surface of the metering roller (3, 4) before it reaches the groove forming means again after metering the coating mass in the metering gap.

5. Apparatus according to one of Claims 1-4, characterised in that two sheet material guide rollers (1, 2) form a pressing gap (12) between them which the sheet of material to be coated passes through in order to transfer the coating mass onto the sheet of material; and that the groove forming means (9, 9', 10, 11) allocated to the two metering rollers (3, 4) are arranged exactly diametrically opposed to one another and are controlled synchronously in their longitudinal movement along the rollers.

6. Apparatus according to one of Claims 1-5, characterised in that a position-controlled feed of the groove forming means (9, 9') along the metering rollers (3, 4) relative to the rotational axes or generated surfaces of the respectively allocated metering roller (3, 4) is provided.

## Revendications

1. Dispositif d'enduction, comprenant au moins d'une manière respective un cylindre et un cylindre de guidage de feuille (1, 2) associé à ce dernier et un cylindre de dosage associé à au moins l'un de ces derniers et comportant une surface rainurée pratiquement suivant la direction circonférentielle ou sous forme d'un filetage, afin de déposer la masse de revêtement dans l'intervalle (13, 14) existant entre le cylindre et le cylindre de guidage de feuille (1, 2), d'une part, et les cylindres de dosage (3, 4), d'autre part, caractérisé par un dispositif de façonnage de rainure ou dispositif de retouche de rainure (9, 9') agencé de façon à pouvoir être réglé sur les cylindres de dosage (1, 2) pendant le fonctionnement du dispositif d'enduction.

2. Dispositif selon la revendication 1, caractérisé en ce que le dispositif de façonnage de rainure est un dispositif de découpage laser (9).

3. Dispositif selon la revendication 1, caractérisé en ce que le dispositif de façonnage de rainure est un dispositif mécanique de rainurage ou filetage à la molette (9').

4. Dispositif selon l'une des revendications 1-3, caractérisé par un dispositif de nettoyage (17, 19) pour le nettoyage de la surface du cylindre de dosage (3, 4) avant que ce dernier n'atteigne de nouveau le dispositif de façonnage de rainure après le dosage de la masse d'enduction dans l'intervalle de dosage.

5. Dispositif selon l'une des revendications 1-4, caractérisé en ce que deux cylindres de guidage de feuille (1, 2) forment entre eux un intervalle de pression (12) traversé par la feuille de matière à revêtir, en vue de transférer la masse de revêtement sur la feuille de matière, et en ce que les dispositifs de façonnage de rainure (9, 9', 10, 11) associés aux deux cylindres de dosage (3, 4) sont disposés exactement d'une manière diamétralement opposée l'un vis-à-vis de l'autre et sont commandés d'une manière synchrone dans leur déplacement longitudinal le long des cylindres.

6. Dispositif selon l'une des revendications 1-5, caractérisé en ce que, le long des cylindres de dosage (3, 4), il est prévu une avance, à régulation de position, du dispositif de façonnage de rainure (9, 9') vis-à-vis des axes de rotation ou des surfaces cylindriques des cylindres de dosage (3, 4) associés respectifs.
